# EUROPEAN PATENT SPECIFICATION

(11) **EP 4 347 690 B1**
(45) Date of publication and mention of the grant of the patent: **09.07.2025**
(21) Application number: 22730190.0
(22) Date of filing: 20.05.2022
(51) Int. Cl.: C08G 65/48, C08G 75/23, C08L 71/00, C08L 81/06, C08K 3/00

(54) **THERMOPLASTIC MOLDING COMPOSITION WITH HIGH TEMPERATURE RESISTANCE**
THERMOPLASTISCHE FORMMASSE MIT HOHER TEMPERATURBESTÄNDIGKEIT
COMPOSITION DE MOULAGE THERMOPLASTIQUE À HAUTE RÉSISTANCE THERMIQUE

(30) Priority: 26.05.2021 EP 21176027
(43) Date of publication of application: 10.04.2024
(73) Proprietor: BASF SE, 67056 Ludwigshafen am Rhein (DE)
(72) Inventor: WEBER, Martin, 67056 Ludwigshafen (DE); STRAUCH, Joachim, 67056 Ludwigshafen (DE); MALETZKO, Christian, 67122 Altrip (DE)
(74) Representative: BASF IP Association
(86) International application number: PCT/EP2022/063776
(87) International publication number: WO 2022/248365

(56) References cited:
- EP-A1- 2 701 831
- EP-B1- 2 701 831
- WO-A2-2009/002984
- US-A1- 2004 259 446
- US-A1- 2008 241 626
- US-A1- 2013 277 318
- US-A1- 2016 068 679

## Description

The present invention relates to a thermoplastic molding composition comprising as components at least one non-sulfonated polyarylene ether sulfone polymer (P), at least one sulfonated polyarylene ether sulfone polymer (sP) and at least one fibrous and/or particulate filler. The present invention furthermore relates to a process for the manufacturing of a molded article using the thermoplastic molding composition and a molded article obtained by this process.

Polyarylene ether sulfone polymers are high-performance thermoplastics in that they feature high heat resistance, good mechanical properties and inherent flame retardancy *(*E.M. Koch, H.-M. Walter, Kunststoffe 80 (1990) 1146*;* E. Döring, Kunststoffe 80, (1990) 1149*,* N. Inchaurondo-Nehm, Kunststoffe 98, (2008) 190*).*

Polyarylene ether sulfone polymers can be formed *inter alia* either via the hydroxide method, wherein a salt is first formed from the dihydroxy component and the hydroxide, or via the carbonate method.

General information regarding the formation of polyarylene ether sulfone polymers by the hydroxide method is found *inter alia* in R.N. Johnson et. al., J. Polym. Sci. A-1 5 (1967) 2375, while the carbonate method is described in J.E. McGrath et. al., Polymer 25 (1984) 1827.

Methods of forming polyarylene ether sulfone polymers from aromatic bishalogen compounds and aromatic bisphenols or salts thereof in an aprotic solvent in the presence of one or more alkali metal or ammonium carbonates or bicarbonates are known to a person skilled in the art and are described in EP-A 297 363 and EP-A 135 130, for example.

High-performance thermoplastics such as polyarylene ether sulfone polymers are formed by polycondensation reactions which are typically carried out at a high reaction temperature in polar aprotic solvents, for example DMF (dimethylformamide), DMAc (dimethylacetamide), sulfolane, DMSO (dimethylsulfoxide) and NMP (N-methylpyrrolidone).

For challenging applications polyarylene ether sulfone polymers are reinforced with fibrous or particulate fillers, particularly glass fibers. This usually leads to a significant increase in stiffness and strength, but due to the weak interaction of the fibrous or particulate fillers and the polymer matrix the toughness of such thermoplastic compounds is significantly reduced. Several approaches to functionalize polyarylene ether sulfone polymers for better adhesion to fibrous or particulate fillers are known in the art.

While EP 855 430 A1 describes the use of polyarylene ether sulfone polymers with carboxylic acid-groups as compatibilizer between polyarylene ether sulfone polymers and fibrous or particulate fillers, EP 257 6676 A1 teaches the use of polyarylene ether sulfone polymers with hydroxyl-endgroups as additive to improve the performance of fiber or filler reinforced polyarylene ether sulfone polymer compounds.

EP 2 701 831 A1 is directed to a thin film composite membrane (TFC membrane) comprising a substrate layer (S) based on a sulfonated polymer, e.g. a sulfonated polyarylether, and a polyamide film layer (F) and further to a method for their preparation. The membrane can be used in osmosis processes, in particular in forward osmosis (FO) processes.

US 2008/0241626 A1 relates to polymer blend membranes of sulfonated and nonsulfonated polysulfones, methods for the preparation of the membrane, and fuel cells comprising the same. The blend membranes can be obtained by varying drying condition and concentration of casting solution.

US 2004/0259446 A1 is directed to protective coverings, such as articles of apparel and enclosures, capable of transmitting high amounts of moisture vapor and resisting permeation to noxious chemicals. The chemical protective coverings comprise a fabric laminate comprising at least one layer of apparel fabric and a layer comprising a sulfonated aromatic polymer.

US 2013/0277318 A1 is directed to ultrafiltration membranes comprising a membrane substrate layer (S) based on a sulfonated polyaryleneethersulfone polymer and to a method for their preparation.

US 2016/0068679 A1 relates to a polymerizable lactam composition comprising at least one polymerizable lactam and at least one polaryl sulfone.

WO 2009/002984 A2 discloses products and processes relating to compatible polymer blends comprising at least one sulfonated polymer and at least one non-sulfonated polymer. The sulfonated polymers are produced using a number of sulfonating agents including a coordination complex of sulfur trioxide.

Due to the high glass transition temperature of the polyarylene ether sulfone polymers, the temperature requirements during processing of such thermoplastic compounds are quite demanding. But also, during their use, these products need to have excellent thermal stability. There is still a need for thermoplastic molding compositions and molded articles made from these thermoplastic molding compositions with improved mechanical properties and good processing stability.

It is therefore an object of the present invention to provide thermoplastic molding compositions which do not retain the disadvantages of the prior art or only in diminished form. The thermoplastic molding compositions shall be easy to produce. Furthermore, the thermoplastic molding composition should be suitable for the manufacturing of molded articles.

This object is achieved by a thermoplastic molding composition comprising as components
(I) 25 to 95 % by weight of at least one non-sulfonated polyarylene ether sulfone polymer (P),
(II) 1 to 10 % by weight of at least one sulfonated polyarylene ether sulfone polymer (sP) having from 1 to 7.5 mol-% of sulfonated recurring units comprising at least one -SO₃Y group wherein Y is hydrogen or a cation equivalent, based on the total amount of the at least one sulfonated polyarylene ether sulfone polymer (sP) contained in the thermoplastic molding composition,
(III) 4 to 70 % by weight of at least one fibrous and/or particulate filler
wherein the % by weight values in each case are based on the total weight of the thermoplastic molding composition.

It has surprisingly been found that thermoplastic molding compositions according to the invention show high temperature resistance and good processability. Moreover, molded articles produced from these thermoplastic molding compositions show excellent thermal stability good mechanical properties, good melt stability, and improved appearance after heat ageing

The present invention will be described in more detail hereinafter.

### Component (I)

The thermoplastic molding composition comprises as component (I) at least one non-sulfonated polyarylene ether sulfone polymer (P). In the present case the terms "at least one non-sulfonated aromatic dihalogen sulfone polymer (P)" and "component (I)" are used synonymously and therefore have the same meaning.

The thermoplastic molding composition comprises 25 to 95 % by weight component (I) based on the total weight of the thermoplastic molding composition.

The term "at least one non-sulfonated polyarylene ether sulfone polymer (P)" in the present case, is understood to mean exactly one non-sulfonated polyarylene ether sulfone polymer (P) and also mixtures of two or more non-sulfonated polyarylene ether sulfone polymers (P).

"Non-sulfonated" within the context of the present invention means that the non-sulfonated polyarylene ether sulfone polymer (P) does not comprise groups resulting from the sulfonation of the aromatic dihalogen sulfone contained in the non-sulfonated polyarylene ether sulfone polymer (P). Processes for the sulfonation are known to the skilled person. In particular, "non-sulfonated" within the context of the present invention means that the non-sulfonated polyarylene ether sulfone polymer (P) does not comprise any -SO₂X group wherein X is selected from the group consisting of OH and O⁻ combined with one cation equivalent.

"One cation equivalent" within the context of the present invention means one cation of a single positive charge or one charge equivalent of a cation with two or more positive charges, for example Li⁺, Na⁺, K⁺, Mg²⁺, Ca²⁺ or NH₄⁺.

In a preferred embodiment the thermoplastic molding composition comprising 30 to 90 % by weight, more preferably 35 to 85 % by weight and most preferably 40 to 80 % by weight of component (I), in in each case are based on the total weight of the thermoplastic molding composition.

Processes for the preparation of component (I) are known to the skilled person. In a preferred embodiment component (I) is prepared by a process comprising the step of converting a reaction mixture (R_{GI}) comprising as components (IA1) at least one non-sulfonated aromatic dihalogen sulfone, (IB1) at least one aromatic dihydroxy compound, (IC) at least one carbonate compound and (ID) at least one aprotic polar solvent.

**Another object** of the present invention is, therefore, a thermoplastic molding composition wherein component (I) is prepared by a process comprising the step of converting a reaction mixture (R_{GI}) comprising as components
(IA1) at least one non-sulfonated aromatic dihalogen sulfone
(IB1) at least one aromatic dihydroxy compound,
(IC) at least one carbonate compound,
(ID) at least one aprotic polar solvent.

### Reaction mixture (R_{GI})

Preferably the preparation of the non-sulfonated polyarylene ether sulfone polymers (P) comprises as step I) converting a reaction mixture (R_{GI}) comprising the components (IA1), (IB1), (IC) and (ID) described above.

The components (IA1) and (IB1) enter into a polycondensation reaction.

Component (ID) acts as a solvent and component (IC) acts as a base to deprotonate component (IB1) during the condensation reaction.

Reaction mixture (R_{GI}) is understood to mean the mixture that is used in the process for preparing the non-sulfonated polyarylene ether sulfone polymer (P). In the present case all details given with respect to the reaction mixture (R_{GI}) thus, relate to the mixture that is present prior to the polycondensation. The polycondensation takes place during the process in which the reaction mixture (R_{GI}) reacts by polycondensation of components (IA1) and (IB1) to give the target product, the non-sulfonated polyarylene ether sulfone polymer (P). The mixture obtained after the polycondensation which comprises the non-sulfonated polyarylene ether sulfone polymer (P) target product is also referred to as product mixture (P_{GI}). The product mixture (P_{GI}) usually furthermore comprises the at least one aprotic polar solvent (component (ID)) and a halide compound. The halide compound is formed during the conversion of the reaction mixture (R_{GI}). During the conversion first, component (IC) reacts with component (IB1) to deprotonate component (IB1). Deprotonated component (IB1) then reacts with component (IA1) wherein the halide compound is formed. This process is known to the person skilled in the art.

The components of the reaction mixture (R_{GI}) are preferably reacted concurrently. The individual components may be mixed in an upstream step and subsequently be reacted. It is also possible to feed the individual components into a reactor in which these are mixed and then reacted.

In the process according to the invention, the individual components of the reaction mixture (R_{GI}) are preferably reacted concurrently preferably in step I). This reaction is preferably conducted in one stage. This means, that the deprotonation of component (IB1) and also the condensation reaction between components (IA1) and (IB1) take place in a single reaction stage without isolation of the intermediate products, for example the deprotonated species of component (IB1).

The process according to step I) is preferably carried out according to the so called "carbonate method". The process is preferably not carried out according to the so called "hydroxide method". This means, that the process according to the invention is not carried out in two stages with isolation of phenolate anions. Therefore, in a preferred embodiment, the reaction mixture (R_{GI}) is essentially free from sodium hydroxide and potassium hydroxide. More preferably, the reaction mixture (R_{GI}) is essentially free from alkali metal hydroxides and alkali earth metal hydroxides.

The term "essentially free" in the present case is understood to mean that the reaction mixture (R_{GI}) comprises less than 100 ppm, preferably less than 50 ppm of sodium hydroxide and potassium hydroxide, preferably of alkali metal hydroxides and alkali earth metal hydroxides, based on the total weight of the reaction mixture (R_{GI}).

It is furthermore preferred that the reaction mixture (R_{GI}) does not comprise toluene or monochlorobenzene. It is particularly preferred that the reaction mixture (R_{GI}) does not comprise any substance which forms an azeotrope with water.

The ratio of component (IA1) and component (IB1) derives in principal from the stoichiometry of the polycondensation reaction which proceeds with theoretical elimination of hydrogen chloride and is established by the person skilled in the art in a known manner.

Preferably, the ratio of halogen end groups derived from component (IA1) to phenolic end groups derived from component (IB1) is adjusted by controlled establishment of an excess of component (IB1) in relation to component (IA1) as starting compound.

More preferably, the molar ratio of component (IB1) to component (IA1) is from 0.96 to 1.08, especially from 0.98 to 1.06, most preferably from 0.985 to 1.05.

Preferably, the conversion in the polycondensation reaction is at least 0.9.

Process step I) for the preparation of the non-sulfonated polyarylene ether sulfone polymer (P) is typically carried out under conditions of the so called "carbonate method". This means that the reaction mixture (R_{GI}) is reacted under the conditions of the so called "carbonate method". The polycondensation reaction is generally conducted at temperatures in the range from 80 to 250 °C, preferably in the range from 100 to 220 °C. The upper limit of the temperature is determined by the boiling point of the at least one aprotic polar solvent (component (ID)) at standard pressure (1013.25 mbar). The reaction is generally carried out at standard pressure. The reaction is preferably carried out over a time interval of 0.5 to 12 h, particularly in the range from 1 to 10 h.

The isolation of the obtained non-sulfonated polyarylene ether sulfone polymer (P) obtained in the process in the product mixture (P_{GI}) may be carried out for example by precipitation of the product mixture (P_{GI}) in water or mixtures of water with other solvents. The precipitated non-sulfonated polyarylene ether sulfone polymer (P) can subsequently be extracted with water and then be dried. In one embodiment of the invention, the precipitate can also be taken up in an acidic medium. Suitable acids are for example organic or inorganic acids for example carboxylic acid such as acetic acid, propionic acid, succinic acid or citric acid and mineral acids such as hydrochloric acid, sulfuric acid or phosphoric acid.

It is possible to filter the product mixture (P_{GI}) after step I). The halide compound can thereby be removed.

The present invention therefore also provides a process wherein the process furthermore comprises step
II) filtration of the product mixture (P_{GI}) obtained in step I).

After the polycondensation in a preferred embodiment a conversion with an aliphatic organic halogen compound is conducted. Thereby the reactive hydroxyl groups are end-caped and the polymer is further stabilized. The conversion with an aliphatic organic halogen compound can be conducted before or after the filtration.

Preferred aliphatic organic halogen compounds are alkyl halides, in particular alkyl chlorides, having linear or branched alkyl groups having from 1 to 10 carbon atoms, in particular primary alkyl chlorides, particularly preferably methyl halide, in particular methyl chloride.

The reaction with the aliphatic organic halogen compound is preferably carried out at a temperature of from 90° to 160°C., in particular from 100° C. to 150° C. The time can vary widely and is usually at least 5 minutes, in particular at least 15 minutes. The reaction time is preferably from 15 minutes to 8 hours, in particular from 30 minutes to 4 hours.

Various methods can be used for the addition of the aliphatic organic halogen compound. The amounts added of the aliphatic organic halogen compound can moreover be stoichiometric or represent an excess, where the excess can by way of example be up to a 5-fold excess. In one preferred embodiment, the aliphatic organic halogen compound is added continuously, in particular via continuous introduction in the form of a stream of gas.

### Component (IA1)

The reaction mixture (R_{GI}) comprises at least one non-sulfonated aromatic dihalogen sulfone as component (IA1).

The term "at least one non-sulfonated aromatic dihalogen sulfone" in the present case, is understood to mean exactly one non-sulfonated aromatic dihalogen sulfone and also mixtures of two or more non-sulfonated aromatic dihalogen sulfones. In the present case the terms "at least one non-sulfonated aromatic dihalogen sulfone" and "component (IA1)" are used synonymously and therefore have the same meaning.

The at least one non-sulfonated aromatic dihalogen sulfone (component (IA1)) is preferably at least one non-sulfonated aromatic dihalodiphenyl sulfone.

"Non-sulfonated" within the context of the present invention means that the aromatic dihalogen sulfone does not comprise groups resulting from the sulfonation of the aromatic dihalogen sulfone. Processes for the sulfonation are known to the skilled person. In particular, "non-sulfonated" within the context of the present invention means that the aromatic dihalogen sulfone does not comprise any -SO₂X group wherein X is selected from the group consisting of OH and O⁻ combined with one cation equivalent.

"One cation equivalent" within the context of the present invention means one cation of a single positive charge or one charge equivalent of a cation with two or more positive charges, for example Li⁺, Na⁺, K⁺, Mg²⁺, Ca²⁺ or NH₄⁺.

Component (IA1) is preferably used as a monomer. This means that the reaction mixture (R_{GI}) comprises component (IA1) preferably as a monomer and not as a prepolymer.

Preferred non-sulfonated aromatic dihalogen sulfones are non-sulfonated 4,4'-dihalodiphenyl sulfones. Particular preference is given to 4,4'-dichlorodiphenyl sulfone, 4,4'-difluorodiphenyl sulfone and/or 4,4'-dibromodiphenyl sulfone. 4,4'-dichlorodiphenyl sulfone and 4,4'-difluorodiphenyl sulfone are particularly preferred, while 4,4'-dichlorodiphenyl sulfone is most preferred.

Another object of the present invention is therefore also a process wherein component (IA1) is selected from the group consisting of 4,4'-dichlorodiphenyl sulfone and 4,4'-difluorodiphenyl sulfone.

Preferably component (IA1) comprises at least 50 % by weight of at least one non-sulfonated aromatic dihalogen sulfone selected from the group consisting of 4,4'-dichlorodiphenyl sulfone and 4,4'-difluorodiphenyl sulfone, based on the total weight of component (IA1) in the reaction mixture (R_{GI}).

In a particularly preferred embodiment, component (IA1) comprises at least 80 % by weight, preferably at least 90 % by weight, more preferably at least 98 % by weight, of at least one non-sulfonated aromatic dihalogen sulfone selected from the group consisting of 4,4'-dichlorodiphenyl sulfone and 4,4'-difluorodiphenyl sulfone, based on the total weight of component (IA1) in the reaction mixture (R_{GI}).

In a further particularly preferred embodiment, component (IA1) consists essentially of at least one non-sulfonated aromatic dihalogen sulfone selected from the group consisting of 4,4'-dichlorodiphenyl sulfone and 4,4'-difluorodiphenyl sulfone.

In a further preferred embodiment, component (IA1) consists of 4,4'-dichlorodiphenyl sulfone.

### Component (IB1)

The reaction mixture (R_{GI}) preferably comprises at least one aromatic dihydroxy compound as component (IB1). The term "at least one aromatic dihydroxy compound", in the present case, is understood to mean exactly one aromatic dihydroxy compound and also mixtures of two or more aromatic dihydroxy compounds. Preferably, component (IB1) is precisely one aromatic dihydroxy compound or a mixture of precisely two dihydroxy compound. Most preferred component (IB1) is precisely one aromatic dihydroxy compound.

In the present case the terms "at least one aromatic dihydroxy compound" and "component (IB1)" are used synonymously and therefore have the same meaning.

The aromatic dihydroxy compounds used are typically compounds having two phenolic hydroxyl groups. Since the reaction mixture (R_{GI}) comprises at least one carbonate compound, the hydroxyl groups of component (IB1) in the reaction mixture (R_{GI}) may be present partially in deprotonated form.

Component (IB1) is preferably used as a monomer. This means that the reaction mixture (R_{GI}) comprises component (IB1) preferably as monomer and not as prepolymer.

Suitable aromatic dihydroxyl compounds are, for example, selected from the group consisting of 4,4'-dihydroxybiphenyl, 4,4'-dihydroxydiphenylsulfone and bisphenol A (IUPAC name: 4,4'-(propane-2,2-diyl)diphenol)).

In one embodiment of the present invention, the reaction mixture (R_{GI}) does not comprise any bisphenol A. In another embodiment the reaction mixture (R_{GI}) does not comprise any hydroquinone.

Component (IB1) preferably comprises at least 50% by weight, more preferably at least 80% by weight, particularly preferably at least 90% by weight and especially at least 98% by weight of an aromatic dihydroxyl compound selected from the group consisting of 4,4'-dihydroxybiphenyl, 4,4'-dihydroxydiphenylsulfone and bisphenol A, based on the total weight of component (IB1) in the reaction mixture (R_{GI}). 4,4'-Dihydroxybiphenyl and 4,4'-dihydroxydiphenylsulfone are preferred as aromatic dihydroxyl components, wherein 4,4'-dihydroxybiphenyl is particularly preferred as aromatic dihydroxyl component.

In a particularly preferred embodiment, component (IB1) consists of 4,4'-dihydroxydiphenyl sulfone, 4,4'-dihydroxydiphenylsulfone or a mixture of these compounds.

### Component (IC)

The reaction mixture (R_{GI}) comprises at least one carbonate compound as component (IC). The term "at least one carbonate compound" in the present case, is understood to mean exactly one carbonate compound and also mixtures of two or more carbonate compounds. The at least one carbonate compound is preferably at least one metal carbonate. The metal carbonate is preferably anhydrous. In the present case the terms "at least one carbonate compound" and "component (IC)" are used synonymously and therefore have the same meaning.

Preference is given to alkali metal carbonates and/or alkaline earth metal carbonates as metal carbonates. At least one metal carbonate selected from the group consisting of sodium carbonate, potassium carbonate and calcium carbonate is particularly preferred as metal carbonate. Potassium carbonate is most preferred.

For example, component (IC) comprises at least 50 % by weight, more preferred at least 70 % by weight and most preferred at least 90 % by weight of potassium carbonate based on the total weight of the at least one carbonate component in the reaction mixture (R_{GI}).

In a preferred embodiment component (IC) consists of potassium carbonate. Potassium carbonate having a volume weighted average particle size of less than 200 µm is particularly preferred as potassium carbonate. The volume weighted average particle size of the potassium carbonate is determined in a suspension of potassium carbonate in N-methylpyrrolidone using a particle size analyser. The amount of metal carbonate used when expressed as alkali metal (M) per equivalent hydroxyl group (OH) ranges preferably from 1.00 to 2.00.

### Component (ID)

The reaction mixture (R_{GI}) comprises preferably at least one aprotic polar solvent as component (ID). "At least one aprotic polar solvent", according to the invention, is understood to mean exactly one aprotic polar solvent and also mixtures of two or more aprotic polar solvents. In the present case the terms "at least one aprotic polar solvent" and "component (ID)" are used synonymously and therefore have the same meaning.

Suitable aprotic polar solvents are, for example, selected from the group consisting of anisole, dimethylformamide, dimethylsulfoxide, sulfolane, N-methylpyrrolidone, N-ethylpyrrolidone and N-dimethylacetamide.

Preferably, component (ID) is selected from the group consisting of N-methylpyrrolidone, N-dimethylacetamide, dimethylsulfoxide and dimethylformamide. N-methylpyrrolidone is particularly preferred as component (ID).

It is preferred that component (ID) comprises at least 50 % by weight of at least one solvent selected from the group consisting of N-methylpyrrolidone, N-dimethylacetamide, dimethylsulfoxide and dimethylformamide based on the total weight of component (ID) in the reaction mixture (R_{GI}). N-methylpyrrolidone is particularly preferred as component (ID).

In a further preferred embodiment, component (ID) consists of N-methylpyrrolidone.

In a preferred embodiment, component (ID) consists of N-methylpyrrolidone. N-methylpyrrolidone is also referred to as NMP or N-methyl-2-pyrrolidone.

The non-sulfonated polyarylene ether sulfone polymers (P), used as component (I), preferably have low polydispersities (Q) and high glass transition temperatures (T_{g}). The non-sulfonated polyarylene ether sulfone polymers (P), moreover, have very low amounts of impurities, for example azeotroping agents such as toluene or chlorobenzene.

The non-sulfonated polyarylene ether sulfone polymers (P) generally has a polydispersity (Q) of ≤ 4.5, preferably ≤ 4.0.

The polydispersity (Q) is defined as the quotient of the weight average molecular weight (M_{w}) and the number average molecular weight (Mₙ). In a preferred embodiment, the polydispersity (Q) of the non-sulfonated polyarylene ether sulfone polymers (P) is in the range of 2.0 to ≤ 4.5, preferably in the range of 2.0 to ≤ 4.0.

The weight average molecular weight (M_{w}) and the number average molecular weight (Mₙ) are measured by means of gel permeation chromatography.

The polydispersity (Q) and the average molecular weights of the non-sulfonated polyarylene ether sulfone polymers (P) were measured by means of gel permeation chromatography (GPC) in dimethylacetamide (DMAc). The mobile phase (eluent) used was DMAc comprising 0.5% by weight of lithium bromide. The concentration of the polyarylether polymer (P) (P solution) was 4 mg per millilitre of solution. After filtration (pore size 0.2 µm), 100 µl of this solution were injected into the GPC system. Four different columns (heated to 80°C) were used for separation (GRAM precolumn, GRAM 30A, GRAM 1000A, GRAM 1000A; separation material: polyester copolymers ex. PSS). The GPC system was operated at a flow rate of 1 ml per minute. A DRI-Agilent 1100 was used as the detection system. PMMA standards ex. PSS having a molecular weight Mₙ in the range of 800 to 1 820 000 g/mol were used for the calibration.

Suitable non-sulfonated polyarylene ether sulfone polymers (P) generally have weight average molecular weights (M_{w}) of 10 000 to 150 000 g/mol, preferably in the range of 15 000 to 120 000 g/mol, particularly preferably in the range of 20 000 to 90 000 g/mol. The weight average molecular weights (M_{w}) are measured by means of gel permeation chromatography (GPC). The measurement is carried out as described above.

Suitable non-sulfonated polyarylene ether sulfone polymers (P) generally have glass transition temperatures in of 185 to 250 °C, preferably in the range of 185 to 245 °C, particularly preferably in the range of 185 to 240 °C

Suitable non-sulfonated polyarylene ether sulfone polymers (P) generally have a raised glass transition temperature (T_{g}). The measurement of the glass transition temperature (T_{g}) was carried out in a DSC 2000 (TA Instruments) at a heating rate of 20 K/min. For the measurement, approximately 5 mg of the substance were sealed in an aluminum crucible. In the first heating run, the samples are heated to 280°C, then rapidly cooled to -100°C and then, in the second heating run, heated to 280°C at 20 K/min. The respective T_{g} value is determined from the second heating run.

In a further preferred embodiment the thermoplastic molding composition contains at least one non-sulfonated polyaryl ether sulfone polymer (P) having less the 0.05 % by weight of OH-end groups, based on the number average weight (Mn) of the non-sulfonated polyaryl ether sulfone polymer (P). The amount of OH-end groups is determined by potentiometric titration using DMF as solvent.

Especially preferred as component (I) are non-sulfonated polyarylene ether polymers (P) selected from the group consisting of polyethersulfone (PESU), polyphenylensulfone (PPSU) and polysulfone (PSU), wherein polyethersulfone (PESU) and polyphenylensulfone (PPSU) are particularly preferred.

In one embodiment the thermoplastic molding composition does not comprise polysulfone (PSU).

The abbreviations PPSU, PESU and PSU in the present case are in accordance with DIN EN ISO 1043-1 :2001.

### Component (II)

The thermoplastic molding composition comprises as component (II) at least one sulfonated polyarylene ether sulfone polymer (sP). In the present case the terms "at least one sulfonated aromatic dihalogen sulfone polymer (sP)" and "component (II)" are used synonymously and therefore have the same meaning.

The thermoplastic molding composition comprises 1 to 10 % by weight component (II) based on the total weight of the thermoplastic molding composition.

The term "at least one sulfonated polyarylene ether sulfone polymer (sP)" in the present case, is understood to mean exactly one sulfonated polyarylene ether sulfone polymer (sP) and also mixtures of two or more sulfonated polyarylene ether sulfone polymers (sP).

The at least one sulfonated polyarylene ether sulfone polymer (sP) comprises from 1 to 7.5 mol-% of sulfonated recurring units comprising at least one -SO₃Y group wherein Y is hydrogen or a cation equivalent, based on the total amount of the at least one sulfonated polyarylene ether sulfone polymer (sP) contained in the thermoplastic molding composition.

Total amount of the at least one sulfonated polyarylene ether sulfone polymer (sP) within the context of the present invention preferably means the total amount of recurring units and end-groups contained in the at least one sulfonated polyarylene ether sulfone polymer (sP).

"Sulfonated" within the context of the present invention means that the sulfonated polyarylene ether sulfone polymer (sP) contains groups resulting from the sulfonation of an aromatic dihalogen sulfone. The sulfonation of aromatic dihalogen sulfones is known to the skilled person. In particular, "sulfonated" means that the sulfonated polyarylene ether sulfone polymer (sP) contains sulfonated recurring units comprising at least one -SO₃Y group wherein Y is hydrogen or a cation equivalent, hereinafter also referred to as sulfonated recurring units.

"Cation equivalent" within the context of the present invention means a cation of a single positive charge or one charge equivalent of a cation with two or more positive charges, for example Li⁺, Na⁺, K⁺, Mg²⁺, Ca²⁺, NH₄⁺, preferably Na⁺, K⁺.

"At least one -SO₃Y group" within the context of the present invention means precisely one -SO₃Y group and also two or more -SO₃Y groups. Preferred are precisely two - SO₃Y groups. This means that the sulfonated recurring units contained in the least one the sulfonated polyarylene ether sulfone polymer (sP) preferably comprise two -SO₃Y groups.

In a preferred embodiment the thermoplastic molding composition comprising 1 to 10 % by weight, more preferably 1,5 to 9 % by weight and most preferably 2,5 to 8 % by weight of component (II), in in each case are based on the total weight of the thermoplastic molding composition.

Processes for the preparation of component (II) are known to the skilled person. In a preferred embodiment component (II) is prepared by a process comprising the step of converting a reaction mixture (R_{GII}) comprising as components (IIA1) at least one non-sulfonated aromatic dihalogen sulfone, (IIA2) at least one sulfonated aromatic dihalogen sulfone (IIB1) at least one aromatic dihydroxy compound, (IIC) at least one carbonate compound and (IID) at least one aprotic polar solvent.

Another object of the present invention is, therefore, a thermoplastic molding composition wherein component (II) is prepared by a process comprising the step of converting a reaction mixture (R_{GII}) comprising as components
(IIA1) from 90 to 99 mol-% of at least one non-sulfonated aromatic dihalogen sulfone, based on the sum of the mol-% of components (IIA1) and (IIA2) contained in the reaction mixture (R_{GII}),
(IIA2) from 1 to 10 mol-% of at least one sulfonated aromatic dihalogen sulfone comprising at least one -SO₃Y group wherein Y is hydrogen or a cation equivalent, based on the sum of the mol-% of components (IIA1) and (IIA2) contained in the reaction mixture (R_{GII}),
(IIB1) at least one aromatic dihydroxy compound,
(IIC) at least one carbonate compound,
(IID) at least one aprotic polar solvent.

### Reaction mixture (R_{GII})

Preferably the preparation of the sulfonated polyarylene ether sulfone polymers (sP) comprises as step I) converting a reaction mixture (R_{GII}) comprising the components (IIA1), (IIA2), (IIB1), (IIC) and (IID) described above.

The components (IIA1), (IIA2) and (IIB1) enter into a polycondensation reaction.

Component (IID) acts as a solvent and component (IIC) acts as a base to deprotonate component (IIB1) during the condensation reaction.

Reaction mixture (R_{GII}) is understood to mean the mixture that is used in the process for preparing the sulfonated polyarylene ether sulfone polymer (sP). In the present case all details given with respect to the reaction mixture (R_{GII}) thus, relate to the mixture that is present prior to the polycondensation. The polycondensation takes place during the process in which the reaction mixture (R_{GII}) reacts by polycondensation of components (IIA1), (IIA2) and (IIB1) to give the target product, the sulfonated polyarylene ether sulfone polymer (sP). The mixture obtained after the polycondensation which comprises the sulfonated polyarylene ether sulfone polymer (sP) target product is also referred to as product mixture (P_{GII}). The product mixture (P_{GII}) usually furthermore comprises the at least one aprotic polar solvent (component (IID)) and a halide compound. The halide compound is formed during the conversion of the reaction mixture (R_{GII}). During the conversion first, component (IIC) reacts with component (IIB1) to deprotonate component (IIB1). Deprotonated component (IIB1) then reacts with components (IIA1) and (IIA2) wherein the halide compound is formed. This process is known to the person skilled in the art.

The components of the reaction mixture (R_{GII}) are preferably reacted concurrently. The individual components may be mixed in an upstream step and subsequently be reacted. It is also possible to feed the individual components into a reactor in which these are mixed and then reacted.

In the process according to the invention, the individual components of the reaction mixture (R_{GII}) are preferably reacted concurrently preferably in step I). This reaction is preferably conducted in one stage. This means, that the deprotonation of component (IIB1) and also the condensation reaction between components (IIA1), (IIA2) and (IIB1) take place in a single reaction stage without isolation of the intermediate products, for example the deprotonated species of component (IIB1).

The process according to step I) is preferably carried out according to the so called "carbonate method". The process is preferably not carried out according to the so called "hydroxide method". This means, that the process according to the invention is not carried out in two stages with isolation of phenolate anions. Therefore, in a preferred embodiment, the reaction mixture (R_{GII}) is essentially free from sodium hydroxide and potassium hydroxide. More preferably, the reaction mixture (R_{GII}) is essentially free from alkali metal hydroxides and alkali earth metal hydroxides.

The term "essentially free" in the present case is understood to mean that the reaction mixture (R_{GI}) comprises less than 100 ppm, preferably less than 50 ppm of sodium hydroxide and potassium hydroxide, preferably of alkali metal hydroxides and alkali earth metal hydroxides, based on the total weight of the reaction mixture (R_{GII}).

It is furthermore preferred that the reaction mixture (R_{GII}) does not comprise toluene or monochlorobenzene. It is particularly preferred that the reaction mixture (R_{GII}) does not comprise any substance which forms an azeotrope with water.

The ratio of component (IIA1), component (IIA2) and component (IIB1) derives in principal from the stoichiometry of the polycondensation reaction which proceeds with theoretical elimination of hydrogen chloride and is established by the person skilled in the art in a known manner.

Preferably, the ratio of halogen end groups derived from components (IIA1) and (IIA2) to phenolic end groups derived from component (IIB1) is adjusted by controlled establishment of an excess of component (IIB1) in relation to components (IIA1) and (IIA2) as starting compound.

More preferably, the molar ratio of component (IIB1) to components (IIA1) and (IIA2) is from 0.96 to 1.08, especially from 0.98 to 1.06, most preferably from 0.985 to 1.05.

For example, the reaction mixture (RGII) comprises from 0.9 to 0.99 mol of component (IIA1) and from 0.01 to 0.1 mol of component (IIA2) per 1 mol of component (IIB1).

Preferably, the conversion in the polycondensation reaction is at least 0.9.

Process step I) for the preparation of the non-sulfonated polyarylene ether sulfone polymer (P) is typically carried out under conditions of the so called "carbonate method". This means that the reaction mixture (R_{GII}) is reacted under the conditions of the so called "carbonate method". The polycondensation reaction is generally conducted at temperatures in the range from 80 to 250 °C, preferably in the range from 100 to 220 °C. The upper limit of the temperature is determined by the boiling point of the at least one aprotic polar solvent (component (IID)) at standard pressure (1013.25 mbar). The reaction is generally carried out at standard pressure. The reaction is preferably carried out over a time interval of 0.5 to 12 h, particularly in the range from 1 to 10 h.

The isolation of the obtained sulfonated polyarylene ether sulfone polymer (sP) obtained in the process in the product mixture (P_{GII}) may be carried out for example by precipitation of the product mixture (P_{GII}) in water or mixtures of water with other solvents. The precipitated sulfonated polyarylene ether sulfone polymer (sP) can subsequently be extracted with water and then be dried. In one embodiment of the invention, the precipitate can also be taken up in an acidic medium. Suitable acids are for example organic or inorganic acids for example carboxylic acid such as acetic acid, propionic acid, succinic acid or citric acid and mineral acids such as hydrochloric acid, sulfuric acid or phosphoric acid.

It is possible to filter the product mixture (P_{GII}) after step I). The halide compound can thereby be removed.

The present invention therefore also provides a process wherein the process furthermore comprises step
II) filtration of the product mixture (P_{GII}) obtained in step I).

### Component (IIA1)

The reaction mixture (R_{GII}) comprises at least one non-sulfonated aromatic dihalogen sulfone as component (IIA1).

The term "at least one non-sulfonated aromatic dihalogen sulfone" in the present case, is understood to mean exactly one non-sulfonated aromatic dihalogen sulfone and also mixtures of two or more non-sulfonated aromatic dihalogen sulfones. In the present case the terms "at least one non-sulfonated aromatic dihalogen sulfone" and "component (IIA1)" are used synonymously and therefore have the same meaning.

The reaction mixture (R_{GII}) comprises preferably from 90 to 99 mol-% of at least one non-sulfonated aromatic dihalogen sulfone as component (IIA1), based on the sum of the mol-% of components (IIA1) and (IIA2) contained in the reaction mixture (R_{GII}). Preferably, the reaction mixture (R_{GII}) comprises from 93 to 98.5 mol-% and most preferably from 93.5 to 98 mol-% of at least one non-sulfonated aromatic dihalogen sulfone as component (IIA1), based on the sum of the mol-% of components (IIA1) and (IIA2) contained in the reaction mixture (R_{GII}).

In view of component (IIA1) the above description and preferences in view of component (IA1) apply accordingly. Components (IIA1) and (IA1) may be equal or different. In one embodiment, components (IIA1) are (IA1) equal. In another embodiment components (IIA1) are (IA1) different.

### Component (IIA2)

In the present case the terms "at least one non-sulfonated aromatic dihalogen sulfone" and "component (IIA1)" are used synonymously and therefore have the same meaning.

The reaction mixture (R_{GII}) preferably comprises preferably from 1 to 10 mol-% of at least one sulfonated aromatic dihalogen sulfone as component (IIA2), based on the sum of the mol-% of components (IIA1) and (IIA2) contained in the reaction mixture (R_{GII}). Preferably, the reaction mixture (R_{GII}) comprises from 1.5 to 7 mol-% and most preferably from 2 to 6.5 mol-% of at least one sulfonated aromatic dihalogen sulfone as component (IIA2), based on the sum of the mol-% of components (IIA1) and (IIA2) contained in the reaction mixture (R_{GII}).

The term "at least one sulfonated aromatic dihalogen sulfone" in the present case, is understood to mean exactly one sulfonated aromatic dihalogen sulfone and also mixtures of two or more sulfonated aromatic dihalogen sulfones.

"Sulfonated" within the context of the present invention means that the sulfonated aromatic dihalogen sulfone comprises at least one group resulting from the sulfonation of the aromatic dihalogen sulfone. The sulfonation of aromatic dihalogen sulfones is known to the skilled person. In particular, "sulfonated" means that the aromatic dihalogen sulfone comprises at least one -SO₃Y group wherein Y is hydrogen or a cation equivalent.

"Cation equivalent" within the context of the present invention means a cation of a single positive charge or one charge equivalent of a cation with two or more positive charges, for example Li⁺, Na⁺, K⁺, Mg²⁺, Ca²⁺, NH₄⁺, preferably Na⁺, K⁺.

"At least one -SO₃Y group" within the context of the present invention means precisely one -SO₃Y group and also two or more -SO₃Y groups. Preferred are precisely two - SO₃Y groups. This means that the at least one sulfonated aromatic dihalogen sulfone is preferably at least one disulfonated aromatic halogen sulfone.

The sum of the mol-% of components (IIA1) and (IIA2) contained in the reaction mixture (R_{GII}) usually is 100 mol-%.

It is preferred that component (IIA2) comprises at least 50 % by weight of at least one sulfonated aromatic dihalogen sulfone selected from the group consisting of
4,4'-dichlorodiphenyl sulfone-3,3'-disulfonic acid,
4,4'-difluorodiphenyl sulfone-3,3'-disulfonic acid,
4,4'-dichloro-diphenylsulfone-3,3'-disulfonic acid disodium salt,
4,4'-dichlorodiphenylsulfone-3,3'-disulfonic acid dipotassium salt,
4,4'-difluorodiphenylsulfone-3,3'-disulfonic acid disodium salt, and
4,4'-difluorodiphenylsulfone-3,3'-disulfonic acid dipotassium salt,
based on the total weight of component (IIA2).

In a particularly preferred embodiment component (IIA2) comprises at least 80 % by weight, preferably at least 90 % by weight, more preferably at least 98 % by weight of at least one sulfonated aromatic dihalogen sulfone selected from the group consisting of 4,4'-dichlorodiphenyl sulfone-3,3'-disulfonic acid, 4,4'-difluorodiphenyl sulfone-3,3'-disulfonic acid, 4,4'-dichloro-diphenylsulfone-3,3'-disulfonic acid disodium salt, 4,4'-dichlorodiphenylsulfone-3,3'-disulfonic acid dipotassium salt, 4,4'-difluorodiphenylsulfone-3,3'-disulfonic acid disodium salt and 4,4'-difluorodiphenylsulfone-3,3'-disulfonic acid dipotassium salt, in each case based on the total weight of component (IIA2) in the reaction mixture (R_{GII}).

It is even more preferred that component (IIA2) comprises at least 50 % by weight of at least one sulfonated aromatic dihalogen sulfone selected from the group consisting of
4,4'-dichloro-diphenylsulfone-3,3'-disulfonic acid disodium salt,
4,4'-dichlorodiphenylsulfone-3,3'-disulfonic acid dipotassium salt,
4,4'-difluorodiphenylsulfone-3,3'-disulfonic acid disodium salt, and
4,4'-difluorodiphenylsulfone-3,3'-disulfonic acid dipotassium salt,
based on the total weight of component (IIA2).

In a even more particularly preferred embodiment component (IIA2) comprises at least 80 % by weight, preferably at least 90 % by weight, more preferably at least 98 % by weight of at least one sulfonated aromatic dihalogen sulfone selected from the group consisting of, 4,4'-dichloro-diphenylsulfone-3,3'-disulfonic acid disodium salt, 4,4'-dichlorodiphenylsulfone-3,3'-disulfonic acid dipotassium salt, 4,4'-difluorodiphenylsulfone-3,3'-disulfonic acid disodium salt and 4,4'-difluorodiphenylsulfone-3,3'-disulfonic acid dipotassium salt, in each case based on the total weight of component (IIA2) in the reaction mixture (R_{GII}).

The terms "sulfonic acid" and "-SO₃Y group" in the context of component (IIA2) are used synonymously and have the same meaning. The term "sulfonic acid" in the 4,4'-dichlorodiphenyl sulfone-3,3'-disulfonic acid and 4,4'-difluorodiphenyl sulfone-3,3'-disulfonic acid therefore means "-SO₃Y group" wherein Y is hydrogen or a cation equivalent.

4,4'-dichlorodiphenylsulfone-3,3'-disulfonic acid and 4,4'-dichlorodiphenylsulfone-3,3'-disulfonic acid disodium salt are particularly preferred as component (IIA2), wherein 4,4'-dichlorodiphenylsulfone-3,3'-disulfonic acid disodium salt is more preferred.

### Component (IIC)

The reaction mixture (R_{GII}) comprises at least one carbonate compound as component (IIC). The term "at least one carbonate compound" in the present case, is understood to mean exactly one carbonate compound and also mixtures of two or more carbonate compounds. The at least one carbonate compound is preferably at least one metal carbonate. The metal carbonate is preferably anhydrous. In the present case the terms "at least one carbonate compound" and "component (IIC)" are used synonymously and therefore have the same meaning.

In view of component (IIC) the above description and preferences in view of component (IC) apply accordingly. Components (IIC) and (IC) may be equal or different. In one embodiment, components (IIC) are (IC) equal. In another embodiment components (IIC) are (IC) different. The amount of metal carbonate used when expressed as alkali metal (M) per equivalent hydroxyl group (OH) ranges preferably from 1.00 to 2.00 is preferred.

### Component (IID)

The reaction mixture (R_{GII}) comprises preferably at least one aprotic polar solvent as component (IID). "At least one aprotic polar solvent", according to the invention, is understood to mean exactly one aprotic polar solvent and also mixtures of two or more aprotic polar solvents. In the present case the terms "at least one aprotic polar solvent" and "component (IID)" are used synonymously and therefore have the same meaning.

In view of component (IID) the above description and preferences in view of component (ID) apply accordingly. Components (IID) and (ID) may be equal or different. In one embodiment, components (IID) are (ID) equal. In another embodiment components (IID) are (ID)different.

The sulfonated polyarylene ether sulfone polymers (sP), used as component (II), preferably have low polydispersities (Q) and high glass transition temperatures (T_{g}). The sulfonated polyarylene ether sulfone polymers (sP), moreover, have very low amounts of impurities, for example azeotroping agents such as toluene or chlorobenzene.

The sulfonated polyarylene ether sulfone polymers (sP) generally has a polydispersity (Q) of ≤ 4.5, preferably ≤ 4.0.

The polydispersity (Q) is defined as the quotient of the weight average molecular weight (M_{w}) and the number average molecular weight (Mₙ). In a preferred embodiment, the polydispersity (Q) of the sulfonated polyarylene ether sulfone polymers (sP) is in the range of 2.0 to ≤ 4.5, preferably in the range of 2.0 to ≤ 4.0.

The weight average molecular weight (M_{w}) and the number average molecular weight (Mₙ) are measured by means of gel permeation chromatography, as described above for component (I).

Suitable sulfonated polyarylene ether sulfone polymers (sP) generally have weight average molecular weights (M_{w}) of 10 000 to 150 000 g/mol, preferably in the range of 15 000 to 120 000 g/mol, particularly preferably in the range of 20 000 to 90 000 g/mol. The weight average molecular weights (M_{w}) are measured by means of gel permeation chromatography (GPC). The measurement is carried out as described above.

Suitable sulfonated polyarylene ether sulfone polymers (sP) generally have glass transition temperatures in of 185 to 255 °C, preferably in the range of 185 to 250 °C, particularly preferably in the range of 185 to 245 °C.

Especially preferred as component (I) are sulfonated polyarylene ether polymers (P) selected from the group consisting of sulfonated polyethersulfone (sPESU), sulfonated polyphenylensulfone (sPPSU) and sulfonated polysulfone (sPSU), wherein sulfonated polyethersulfone (sPESU) and sulfonated polyphenylensulfone (sPPSU) are particularly preferred.

In one embodiment the thermoplastic molding composition does not comprise sulfonated polysulfone (sPSU).

The abbreviations PPSU, PESU and PSU in the present case are in accordance with DIN EN ISO 1043-1 :2001.

### Component (III)

The thermoplastic molding composition comprises as component (III) at least one fibrous and/or particulate filler. In the present case the terms "at least one fibrous and/or particulate filler" and "component (III)" are used synonymously and therefore have the same meaning.

The thermoplastic molding composition comprises 4 to 70 % by weight of component (III) based on the total weight of the thermoplastic molding composition.

The term "at least one fibrous and/or particulate filler" in the present case, is understood to mean exactly one at least one fibrous and/or particulate filler and also mixtures of two or more at least one fibrous and/or particulate fillers.

In a preferred embodiment the thermoplastic molding composition comprising 8.5 to 60 % by weight, more preferably 12.5 to 50 % by weight and most preferably 17 to 45 % by weight of component (III), in in each case are based on the total weight of the thermoplastic molding composition.

In a preferred embodiment the thermoplastic molding composition comprises as component (III) at least one fibrous filler selected from the group consisting of carbon fibers, potassium titanate whiskers, aramid fibers, and glass fibers and/or at least one particulate filler selected from the group consisting of amorphous silica, magnesium carbonate, chalk, powdered quartz, mica, clay, muscovite, biotite, suzoite, tin maletite, talc, chlorite, phlogopite, feldspar, wollastonite and kaolin.

### Component (IV)

In one embodiment, the thermoplastic molding composition can comprise as component (IV) at least one additive. The further component (IV) is typically present in the range of 0 to 40 % by weight, preferably in the range of 0 to 30 % by weight and especially preferred in the range of 0 to 20 % by weight, in each case based on the total weight of the thermoplastic molding composition.

Component (IV) is preferably at least one additive selected from the group consisting of processing aids, pigments, stabilizers, flame retardants, impact modifiers or mixtures of those. Common materials that can be utilized are for example heat stabilizers, UV-stabilizers, Lubricants, pigments and dyes. Component IV can be present in amounts of 0 to 40 wt.%, preferably from 0 to 25 wt.% in each case based on the total weight of the thermoplastic molding composition.

Pigments are usually used in quantities from 0 to 6 wt.%, preferably from 0 to 5 wt.%. Pigments for the coloration of thermoplastic materials are generally known and can be found in R. Gächter and H. Müller, Taschenbuch der Kunststoffadditive, Carl Hanser Verlag. As preferred pigments Zincoxide or Titaniumoxide can be used. Furthermore, carbon black can be applied as pigment (see G. Benzing, "Pigmente für Anstrichmittel", Expert Verlag (1988) p.78). To create other colors Chromium-based pigments or organic pigments can be utilized.

As heat stabilizers the well known additives like sterically hindered phenols or secondary amines can be utilized. For UV-protection benztriazoles, benzophenons or other known UV-stabilizers are applicable.

As lubricant or demolding agents stearylalcohol, stearic acid, stearic acid esters or amides or esters of Pentaerythrite can be used. Preferably stearic acid can be used.

Methods for the production of the thermoplastic molding composition are known by the person skilled in the art. For the production of the thermoplastic molding composition, generally the components (I), (II) and (III) and optionally (IV) are mixed.

For the production of the thermoplastic molding composition, the components can be, for example, dry-blended or compounded in a compounding unit in the molten state. Preferably, the components for the production of the thermoplastic molding composition are compounded in an extruder, preferably a twin screw extruder. The melt temperature in the barrels is preferably kept below 400 °C, more preferably below 380°C.

The present invention is further elucidated by the following working examples without limiting it thereto.

### Examples

### Components used

### Component I

### Component 11

As component I1 a polyethersulfone (PESU) having a viscosity number of 49.0 ml/g was used. The used product had 0.19 wt.-% CI-Endgroups (Elemental analysis) and 0.23 wt.-% OCH3-Endgroups (¹H-NMR). The amount of OH-endgroups was below the detection limit (< 0.02 wt.%).

### Component 12

As component I2 a polyphenylenesulfone (PPSU) having a viscosity number of 59.0 ml/g was used. The amount of OH-endgroups was below the detection limit (< 0.02 wt. %).

### Component II

### Component II1

The preparation of the sulfonated PESU (sPESU) was done according to the following procedure:
In a 4 l HWS-vessel with stirrer, Dean-Stark-trap, nitrogen-inlet and temperature control, 562.83 g (1.960 mol) 4,4'-Dichlorodiphenylsulfone (DCDPS), 24.56 g (0.05 mol) Disodium 3,3'-disulfonate-4,4'-dichlorodiphenylsulfone (sDCDPS), 500.34 g (2,00 mol) 4,4'-Dihydroxydiphenylsulfone (DHDPS), and 304.062 g (2.20 mol) Potassiumcarbonate (particle size 39,3 µm) are suspended under nitrogen atmosphere in 1050 ml NMP. Under stirring the mixture is heated up to 190°C. 30 I/h Nitrogen is purged through the mixture and the mixture is kept at 190°C for 9 h. After this time 1950 ml NMP are added to cool down the mixture. Under nitrogen the mixture is allowed to cool down below 60°C. After filtration the polymer solution is precipitated in water. The precipitated product is extracted with hot water (20 h at 85°C) and dried at 120°C for 24 h under reduced pressure.

The viscosity number (V.N.) of the product was 62.0 ml/g, the quantity of sDCDPS-units incorporated was 2 mol% (¹H-NMR).

### Component 112

In a 4 l HWS-vessel with stirrer, Dean-Stark-trap, nitrogen-inlet and temperature control, 545.60 g (1.90 mol) 4,4'-Dichlorodiphenylsulfone (DCDPS), 49.12 g (0.10 mol) Disodium 3,3'-disulfonate-4,4'-dichlorodiphenylsulfone (sDCDPS), 500.34 g (2,00 mol) 4,4'-Dihydroxydiphenylsulfone (DHDPS), and 304.062 g (2.20 mol) Potassiumcarbonate (particle size 39,3 µm) are suspended under nitrogen atmosphere in 1050 ml NMP. Under stirring the mixture is heated up to 190°C. 30 I/h Nitrogen is purged through the mixture and the mixture is kept at 190°C for 9.5 h. After this time 1950 ml NMP are added to cool down the mixture. Under nitrogen the mixture is allowed to cool down below 60°C. After filtration the polymer solution is precipitated in water. The precipitated product is extracted with hot water (20 h at 85°C) and dried at 120°C for 24 h under reduced pressure.

The V.N. of the product was 64.1 ml/g, the quantity of sDCDPS-units incorporated was 3.9 mol% (¹H-NMR).

### Component 113

The preparation of the sulfonated PPSU (sPPSU) was done according to the following procedure:
In a 4 l HWS-vessel with stirrer, Dean-Stark-trap, nitrogen-inlet and temperature control, 516.88 g (1.80 mol) 4,4'-Dichlorodiphenylsulfone (DCDPS), 98.25 g (0.20 mol) Disodium 3,3'-disulfonate-4,4'-dichlorodiphenylsulfone (sDCDPS), 372.42 g (2,00 mol) 4,4'-Dihydroxybiphenyl (DHBP), and 304.06 g (2.20 mol) Potassiumcarbonate (particle size 37.5 µm) are suspended under nitrogen atmosphere in 1250 ml NMP. Under stirring the mixture is heated up to 190°C. 30 I/h Nitrogen is purged through the mixture and the mixture is kept at 190°C for 6 h. After this time 1750 ml NMP are added to cool down the mixture. Under nitrogen 6 the mixture is allowed to cool down below 60°C. After filtration the polymer solution is precipitated in water. The precipitated product is extracted with hot water (20 h at 85°C) and dried at 120°C for 24 h under reduced pressure.

The V.N. of the product was 63.4 ml/g, the amount of unit based on sDCDPS was 6.5 mol% (determined by ¹H-NMR).

### Component 114

The preparation of the sulfonated PPSU (sPPSU) was done according to the following procedure:
In a 4 l HWS-vessel with stirrer, Dean-Stark-trap, nitrogen-inlet and temperature control, 574.34 g (2.00 mol) 4,4'-Dichlorodiphenylsulfone (DCDPS), 24.56 g (0.05 mol) Disodium 3,3'-disulfonate-4,4'-dichlorodiphenylsulfone (sDCDPS), 372.42 g (2,00 mol) 4,4'-Dihydroxybiphenyl (DHBP), and 293.0 g (2.12 mol) Potassiumcarbonate (particle size 37.5 µm) are suspended under nitrogen atmosphere in 1250 ml NMP. Under stirring the mixture is heated up to 190°C. 30 I/h Nitrogen is purged through the mixture and the mixture is kept at 190°C for 6 h. After this time 1750 ml NMP are added to cool down the mixture. Under nitrogen the mixture is allowed to cool down below 60°C. After filtration the polymer solution is precipitated in water. The precipitated product is extracted with hot water (20 h at 85°C) and dried at 120°C for 24 h under reduced pressure.

The V.N. of the product was 75.4 ml/g, the amount of unit based on sDCDPS was 1.9 mol% (determined by ¹H-NMR).

### Component IIV1

The preparation of the sulfonated PPSU (sPPSU) was done according to the following procedure:
In a 4 l HWS-vessel with stirrer, Dean-Stark-trap, nitrogen-inlet and temperature control, 488.19 g (1.70 mol) 4,4'-Dichlorodiphenylsulfone (DCDPS), 148.56 g (0.30 mol) Disodium 3,3'-disulfonate-4,4'-dichlorodiphenylsulfone (sDCDPS), 372.42 g (2,00 mol) 4,4'-Dihydroxybiphenyl (DHBP), and 317.88 g (2.30 mol) Potassiumcarbonate (particle size 37.5 µm) are suspended under nitrogen atmosphere in 1250 ml NMP. Under stirring the mixture is heated up to 190°C. 30 I/h Nitrogen is purged through the mixture and the mixture is kept at 190°C for 7.5 h. After this time 1750 ml NMP are added to cool down the mixture. Under nitrogen the mixture is allowed to cool down below 60°C. After filtration the polymer solution 7 is precipitated in water. The precipitated product is extracted with hot water (20 h at 85°C) and dried at 120°C for 24 h under reduced pressure.

The V.N. of the product was 61.1 ml/g, the amount of unit based on sDCDPS was 11.2 mol% (determined by ¹H-NMR).

### Component IIV2

The preparation of the OH-terminated PESU (PESU-OH) was done according to the following procedure:
In a 4 l HWS-vessel with stirrer, Dean-Stark-trap, nitrogen-inlet and temperature control, 278,27 g (0,969 mol) 4,4'-Dichlorodiphenylsulfone (DCDPS), 250,17 g (1,00 mol) 4,4'-Dihydroxydiphenylsulfone (DHDPS), and 152,03 g (1,10 mol) Potassiumcarbonate (particle size 39,3 µm) are suspended under nitrogen atmosphere in 1000 ml NMP. Under stirring the mixture is heated up to 190°C. 30 I/h Nitrogen is purged through the mixture and the mixture is kept at 190°C for 6 h. After this time 500 ml NMP are added to cool down the mixture. Under nitrogen the mixture is allowed to cool down below 60°C. After filtration the polymer solution is precipitated in water. The precipitated product is extracted with hot water (20 h at 85°C) and dried at 120°C for 24 h under reduced pressure.

The V.N. of the product was 48.3 ml/g, the amount of OH-endgroups was 0.22 wt.% (determined by potentiometric titration).

### Component IIV3

The preparation of the Carboxyl-functionalized PPSU, according to EP 855430 (PPSU-co DPA) was done according to the following procedure:
In a 4 l HWS-vessel with stirrer, Dean-Stark-trap, nitrogen-inlet and temperature control, 585.81 g (2.04 mol) 4,4'-Dichlorodiphenylsulfone (DCDPS), 42.95 g (0.15 mol) Diphenoxy valeric acid (DPA), 344.49 g (1,70 mol) 4,4'-Dihydroxybiphenyl (DHDP), and 310.97 g (2.25 mol) Potassiumcarbonate (particle size 39,3 µm) are suspended under nitrogen atmosphere in 1538 ml NMP. Under stirring the mixture is heated up to 190°C. 30 I/h Nitrogen is purged through the mixture and the mixture is kept at 190°C for 6 h. After this time 1462 ml NMP are added to cool down the mixture. Under nitrogen the mixture is allowed to cool down below 60°C. After filtration the polymer solution is precipitated in water. The precipitated product is extracted with hot water (20 h at 85°C) and dried at 120°C for 24 h under reduced pressure.

The V.N. of the product was 48.3 ml/g, the quantity of DPA-based units was 6.2 mol% (determined by ¹H-NMR).

### Component III

Glass fibers, chopped strands (length 4,5 mm) with a diameter of 10 µm and a PU-based sizing.

The viscosity numbers (V.N.) are preferably determined at a concentration of 1 g polymer in 100 ml NMP at 25°C using an Ubbelohde-viscosimeter.

The amount of OH end groups is determined by potentiometric titration using DMF as solvent.

### Production of the thermoplastic molding composition I testing

Compounding was done using a twin screw extruder (ZSK 18), the barrel temperatures were set to keep the melt temperature below 400°C. Moulding of the test samples was done at a melt temperature of 360°C and a mold temperature of 140°C. Tensile testing was done according to ISO 527 (E-Modulus, strength, tensile elongation).

Impact strength was tested according to ISO 179 1eU. The melt flow of the products was tested according to ISO 1133 at melt temperature of 360°C and a load of 10 kg.

Tensile bars were stored at 200°C for 500 h and then a tensile test was performed.

The content of units derived form the sulfonated monomer (sDCDPS) and DPA were determined by ¹H-NMR.

The color of the tensile bars was assessed after ageing and classified into three classes: 0 unchanged; 1 defects (bubbles,..) 2 discoloration.

**Table 1:**

| **Example** | **V1** | **2** | **3** | **V4** | **5** | **6** | **V7** | **V8** | **V9** |
|---|---|---|---|---|---|---|---|---|---|
| I1 (PESU) | 70 | 65 | 65 | - | - | - | - | 65 | - |
| I2 (PPSU) | - | - | - | 70 | 65 | 65 | 65 | - | 65 |
| II1 (sPESU) | - | 5 | - | - | - | - | - | - | - |
| II2 (sPESU) | - | - | 5 | - | - | - | - | - | - |
| II3 (sPPSU) | - | - | - | - | 5 | - | - | - | - |
| II4 (sPPSU) | - | - | - | - | - | 5 | - | - | - |
| IIV1 (sPPSU) | - | - | - | - | - | - | 5 | - | - |
| IIV2 (PESU-OH) | - | - | - | - | - | - | - | 5 | - |
| IIV3 (PPSU-DPA) | - | - | - | - | - | - | - | - | 5 |
| III (GF) | 30 | 30 | 30 | 30 | 30 | 30 | 30 | 30 | 30 |
| ISO 179 1eU [kJ/m²] | 56 | 69 | 73 | 39 | 68 | 71 | 56 | 60 | 65 |
| E-Modulus [GPa] | 9.5 | 9.4 | 9.5 | 8.9 | 9.0 | 9.0 | 8.7 | 9.5 | 8.9 |
| Strength at break [MPa] | 148 | 153 | 154 | 133 | 139 | 143 | 117 | 151 | 144 |
| Elong. at break [%] | 2.7 | 3.2 | 3.1 | 2.3 | 3.0 | 3.2 | 1.8 | 2.9 | 3.1 |
| MVR [ml/10min] | 59 | 52 | 51 | 28 | 24 | 26 | 29 | 54 | 23 |
| Strength at break ann. [MPa] | 131 | 139 | 143 | 127 | 134 | 140 | 106 | 122 | 119 |
| Elong. at break ann. [%] | 2.1 | 2.7 | 2.9 | 1.9 | 2.8 | 3.0 | 1.5 | 2.2 | 2.1 |
| Appearance after ageing | 2 | 0 | 0 | 1 | 0 | 0 | 1,2 | 2 | 2 |

The thermoplastic molding compositions according to the invention show excellent mechanical performance and surprisingly the best retention of tensile properties after extensive annealing.

## Claims

1. Thermoplastic molding composition comprising as components
(I) 25 to 95 % by weight of at least one non-sulfonated polyarylene ether sulfone polymer (P),
(II) 1 to 10 % by weight of at least one sulfonated polyarylene ether sulfone polymer (sP) having from 1 to 7.5 mol-% of sulfonated recurring units comprising at least one -SO₃Y group wherein Y is hydrogen or a cation equivalent, based on the total amount of the at least one sulfonated polyarylene ether sulfone polymer (sP) contained in the thermoplastic molding composition,
(III) 4 to 70 % by weight of at least one fibrous and/or particulate filler
wherein the % by weight values in each case are based on the total weight of the thermoplastic molding composition.

2. The thermoplastic molding composition according to claim 1, wherein component (I) is prepared by a process comprising the step of converting a reaction mixture (R_{GI}) comprising as components
(IA1) at least one non-sulfonated aromatic dihalogen sulfone
(IB1) at least one aromatic dihydroxy compound,
(IC) at least one carbonate compound,
(ID) at least one aprotic polar solvent.

3. The thermoplastic molding composition according to claim 1 or 2, wherein component (II) is prepared by a process comprising the step of converting a reaction mixture (R_{GII}) comprising as components
(IIA1) from 90 to 99 mol-% of at least one non-sulfonated aromatic dihalogen sulfone, based on the sum of the mol-% of components (IIA1) and (IIA2) contained in the reaction mixture (R_{GII}),
(IIA2) from 1 to 10 mol-% of at least one sulfonated aromatic dihalogen sulfone comprising at least one -SO₃Y group wherein Y is hydrogen or a cation equivalent, based on the sum of the mol-% of components (IIA1) and (IIA2) contained in the reaction mixture (R_{GII}),
(IIB1) at least one aromatic dihydroxy compound,
(IIC) at least one carbonate compound,
(IID) at least one aprotic polar solvent.

4. The thermoplastic molding composition according to claim 2 or 3, wherein component (IA1) comprises at least 50 % by weight of one ore more non-sulfonated aromatic dihalogen sulfone/s selected from the group consisting of 4,4'-dichlorodiphenylsulfone and 4,4'-difluorodiphenylsulfone based on the total weight of component (IA1) contained in the reaction mixture (R_{GI}).

5. The thermoplastic molding composition according to any of claims 2 to 4, wherein component (IIA1) comprises at least 50 % by weight of one ore more non-sulfonated aromatic dihalogen sulfone/s selected from the group consisting of 4,4'-dichlorodiphenylsulfone and 4,4'-difluorodiphenylsulfone based on the total weight of component (IIA1) contained in the reaction mixture (R_{GII}).

6. The thermoplastic molding composition according to any of claims 3 to 5, wherein component (IIA2) comprises at least 50 % by weight of one ore more sulfonated aromatic dihalogen sulfone/s selected from the group consisting of disulfonated 4,4'-dichlorodiphenylsulfone and disulfonated 4,4'-difluorodiphenylsulfone based on the total weight of component (IIA2) contained in the reaction mixture (R_{GII}).

7. The thermoplastic molding composition according to any of claims 2 to 6, wherein component (IB1) comprises at least 50 % by weight of one ore more aromatic dihydroxy compound/s selected from the group consisting of 4,4'-dihydroxydiphenylsulfone, 4,4'-dihydroxybiphenyl and bisphenol-A, based on the total weight of component (IB1) contained in the reaction mixture (R_{GI}).

8. The thermoplastic molding composition according to any of claims 3 to 7, wherein component (IIB1) comprises at least 50 % by weight of one ore more aromatic dihydroxy compound/s selected from the group consisting of 4,4'-dihydroxydiphenylsulfone, 4,4'-dihydroxybiphenyl and bisphenol-A, based on the total weight of component (IIB1) contained in the reaction mixture (R_{GII}).

9. The thermoplastic molding composition according to any of claims 1 to 8, wherein the at least one non-sulfonated polyaryl ether sulfone polymer (P) has less the 0.05 % by weight of OH-end groups, based on the number average weight (Mₙ) of the non-sulfonated polyaryl ether sulfone polymer (P).

10. The thermoplastic molding composition according to any of claims 2 to 9, wherein component (IC) and/or component (IIC) comprises at least 50 wt.-% of potassium carbonate, based on the total weight of component (IC) contained in the reaction mixture (R_{GI}) and/or respectively based on the total weight of component (IIC) contained in the reaction mixture (R_{GII})

11. The thermoplastic molding composition according to any of claims 2 to 10, wherein component (ID) and/or component (IID) is at least one aprotic polar solvent selected from the group consisting of anisole, dimethylformamide, dimethyl sulfoxide, sulfolane, N,N-dimethylacetamide, N-methyl-2-pyrrolidone and N-ethyl-2-pyrrolidone.

12. The thermoplastic molding composition according to any of claims 1 to 11, wherein component (III) is at least one fibrous filler selected from the group consisting of carbon fibers, potassium titanate whiskers, aramid fibers, and glass fibers and/or at least one least one particulate filler selected from the group consisting of amorphous silica, magnesium carbonate, chalk, powdered quartz, mica, clay, muscovite, biotite, suzoite, tin maletite, talc, chlorite, phlogopite, feldspar, wollastonite and kaolin.

13. The thermoplastic molding composition according to any of claims 1 to 12, wherein in component (II) Y is a cation equivalent.

14. A process for the manufacturing a molded article using the thermoplastic molding composition according to any of claims 1 to 13.

15. Molded article obtained by the process according to claim 14.

## Patentansprüche

1. Thermoplastische Formmasse, umfassend als Komponenten
(I) 25 bis 95 Gew.-% mindestens eines nicht sulfonierten Polyarylenethersulfon-Polymers (P),
(II) 1 bis 10 Gew.-% mindestens eines sulfonierten Polyarylenethersulfon-Polymers (sP) mit 1 bis 7,5 Mol-% sulfonierten Wiederholungseinheiten, die mindestens eine -SO₃Y-Gruppe umfassen, wobei Y für Wasserstoff oder ein Kationenäquivalent steht, bezogen auf die Gesamtmenge des mindestens einen sulfonierten Polyarylenethersulfon-Polymers (sP), das in der thermoplastischen Formmasse enthalten ist,
(III) 4 bis 70 Gew.-% mindestens eines faser- und/oder teilchenförmigen Füllstoffs,
wobei sich die Gew.-%-Werte jeweils auf das Gesamtgewicht der thermoplastischen Formmasse beziehen.

2. Thermoplastische Formmasse nach Anspruch 1, wobei die Komponente (I) nach einem Verfahren hergestellt wird, das den Schritt des Umsetzens einer Reaktionsmischung (R_{GI}) umfasst, die als Komponenten Folgendes umfasst:
(IA1) mindestens ein nicht sulfoniertes aromatisches Dihalogensulfon,
(IB1) mindestens eine aromatische Dihydroxyverbindung,
(IC) mindestens eine Carbonatverbindung,
(ID) mindestens ein aprotisches polares Lösungsmittel.

3. Thermoplastische Formmasse nach Anspruch 1 oder 2, wobei die Komponente (II) nach einem Verfahren hergestellt wird, das den Schritt des Umsetzens einer Reaktionsmischung (R_{GII}) umfasst, die als Komponenten Folgendes umfasst:
(IIA1) 90 bis 99 Mol-% mindestens eines nicht sulfonierten aromatischen Dihalogensulfons, bezogen auf die Summe der Mol-% der in der Reaktionsmischung (R_{GII}) enthaltenen Komponenten (IIA1) und (IIA2),
(IIA2) 1 bis 10 Mol-% mindestens eines sulfonierten aromatischen Dihalogensulfons mit mindestens einer -SO₃Y-Gruppe, wobei Y für Wasserstoff oder ein Kationenäquivalent steht, bezogen auf die Summe der Mol-% der in der Reaktionsmischung (R_{GII}) enthaltenen Komponenten (IIA1) und (IIA2),
(IIB1) mindestens eine aromatische Dihydroxyverbindung,
(IIC) mindestens eine Carbonatverbindung,
(IID) mindestens ein aprotisches polares Lösungsmittel.

4. Thermoplastische Formmasse nach Anspruch 2 oder 3, wobei Komponente (IA1) mindestens 50 Gew.-% eines oder mehrerer nicht sulfonierter aromatischer Dihalogensulfone, die aus der Gruppe bestehend aus 4,4'-Dichlordiphenylsulfon und 4,4'-Difluordiphenylsulfon ausgewählt sind, bezogen auf das Gesamtgewicht der in der Reaktionsmischung (R_{GI}) enthaltenen Komponente (IA1), umfasst.

5. Thermoplastische Formmasse nach einem der Ansprüche 2 bis 4, wobei Komponente (IIA1) mindestens 50 Gew.-% eines oder mehrerer nicht sulfonierter aromatischer Dihalogensulfone, die aus der Gruppe bestehend aus 4,4'-Dichlordiphenylsulfon und 4,4'-Difluordiphenylsulfon ausgewählt sind, bezogen auf das Gesamtgewicht der in der Reaktionsmischung (R_{GII} enthaltenen Komponente (IIA1), umfasst.

6. Thermoplastische Formmasse nach einem der Ansprüche 3 bis 5, wobei Komponente (IIA2) mindestens 50 Gew.-% eines oder mehrerer sulfonierter aromatischer Dihalogensulfone, die aus der Gruppe bestehend aus disulfoniertem 4,4'-Dichlordiphenylsulfon und disulfoniertem 4,4'-Difluordiphenylsulfon ausgewählt sind, bezogen auf das Gesamtgewicht der in der Reaktionsmischung (R_{GII} enthaltenen Komponente (IIA2), umfasst.

7. Thermoplastische Formmasse nach einem der Ansprüche 2 bis 6, wobei Komponente (IB1) mindestens 50 Gew.-% einer oder mehrerer aromatischer Dihydroxyverbindungen, die aus der Gruppe bestehend aus 4,4'-Dihydroxydiphenylsulfon, 4,4'-Dihydroxybiphenyl und Bisphenol-A ausgewählt sind, bezogen auf das Gesamtgewicht der in der Reaktionsmischung (R_{GI}) enthaltenen Komponente (IB1), umfasst.

8. Thermoplastische Formmasse nach einem der Ansprüche 3 bis 7, wobei Komponente (IIB1) mindestens 50 Gew.-% einer oder mehrerer aromatischer Dihydroxyverbindungen, die aus der Gruppe bestehend aus 4,4'-Dihydroxydiphenylsulfon, 4,4'-Dihydroxybiphenyl und Bisphenol-A ausgewählt sind, bezogen auf das Gesamtgewicht der in der Reaktionsmischung (R_{GII}) enthaltenen Komponente (IIB1), umfasst.

9. Thermoplastische Formmasse nach einem der Ansprüche 1 bis 8, wobei das mindestens eine nicht sulfonierte Polyarylethersulfonpolymer (P) weniger als 0,05 Gew.-% OH-Endgruppen, bezogen auf das zahlenmittlere Gewicht (Mₙ) des nicht sulfonierten Polyarylethersulfonpolymers (P), aufweist.

10. Thermoplastische Formmasse nach einem der Ansprüche 2 bis 9, wobei Komponente (IC) und/oder Komponente (IIC) mindestens 50 Gew.-% Kaliumcarbonat, bezogen auf das Gesamtgewicht der in der Reaktionsmischung (R_{GI}) enthaltenen Komponente (IC) und/oder respektive bezogen auf das Gesamtgewicht der in der Reaktionsmischung (R_{GII}) enthaltenen Komponente (IIC), umfasst.

11. Thermoplastische Formmasse nach einem der Ansprüche 2 bis 10, wobei es sich bei Komponente (ID) und/oder Komponente (IID) um mindestens ein aprotisches polares Lösungsmittel, das aus der Gruppe bestehend aus Anisol, Dimethylformamid, Dimethylsulfoxid, Sulfolan, N,N-Dimethylacetamid, N-Methyl-2-pyrrolidon und N-Ethyl-2-pyrrolidon ausgewählt ist, handelt.

12. Thermoplastische Formmasse nach einem der Ansprüche 1 bis 11, wobei es sich bei Komponente (III) um mindestens einen faserförmigen Füllstoff, der aus der Gruppe bestehend aus Kohlenstofffasern, Kaliumtitanatwhiskern, Aramidfasern und Glasfasern ausgewählt ist, und/oder mindestens einen teilchenförmigen Füllstoff, der aus der Gruppe bestehend aus amorphem Siliciumdioxid, Magnesiumcarbonat, Kreide, Quarzmehl, Glimmer, Ton, Muscovit, Biotit, Suzoit, Zinnmaletit, Talkum, Chlorit, Phlogopit, Feldspat, Wollastonit und Kaolin ausgewählt ist, handelt.

13. Thermoplastische Formmasse nach einem der Ansprüche 1 bis 12, wobei in Komponente (II) Y für ein Kationenäquivalent steht.

14. Verfahren zur Herstellung eines Formkörpers unter Verwendung der thermoplastischen Formmasse nach einem der Ansprüche 1 bis 13.

15. Formkörper, erhalten nach dem Verfahren gemäß Anspruch 14.

## Revendications

1. Composition de moulage thermoplastique comprenant comme composants
(I) 25 à 95 % en poids d'au moins un polymère de polyarylène éther sulfone non sulfonée (P),
(II) 1 à 10 % en poids d'au moins un polymère de polyarylène éther sulfone sulfonée (SP) ayant de 1 à 7,5 % en moles de motifs répétitifs sulfonés comprenant au moins un groupe -SO₃Y dans lequel Y est hydrogène ou un équivalent cation, par rapport à la quantité totale de l'au moins un polymère de polyarylène éther sulfone sulfonée (SP) contenu dans la composition de moulage thermoplastique,
(III) 4 à 70 % en poids d'au moins une charge fibreuse et/ou particulaire
les valeurs de % en poids étant en chaque cas basées sur le poids total de la composition de moulage thermoplastique.

2. Composition de moulage thermoplastique selon la revendication 1, dans laquelle le composant (I) est préparé par un procédé comprenant l'étape de conversion d'un mélange réactionnel (R_{GI}) comprenant comme composants
(IA1) au moins une dihalogénosulfone aromatique non sulfonée,
(IB1) au moins un composé dihydroxy aromatique,
(IC) au moins un composé de carbonate,
(ID) au moins un solvant polaire aprotique.

3. Composition de moulage thermoplastique selon la revendication 1 ou 2, dans laquelle le composant (II) est préparé par un procédé comprenant l'étape de conversion d'un mélange réactionnel (R_{GII}) comprenant comme composants
(IIA1) de 90 à 99 % en moles d'au moins une dihalogénosulfone aromatique non sulfonée, par rapport à la somme des % en moles des composants (IIA1) et (IIA2) contenus dans le mélange réactionnel (R_{GII}),
(IIA2) de 1 à 10 % en moles d'au moins une dihalogénosulfone aromatique sulfonée comprenant au moins un groupe -SO₃Y dans lequel Y est hydrogène ou un équivalent cation, par rapport à la somme des % en moles des composants (IIA1) et (IIA2) contenus dans le mélange réactionnel (R_{GII}),
(IIB1) au moins un composé dihydroxy aromatique,
(IIC) au moins un composé de carbonate,
(IID) au moins un solvant polaire aprotique.

4. Composition de moulage thermoplastique selon la revendication 2 ou 3, dans laquelle le composant (IA1) comprend au moins 50 % en poids d'une ou plusieurs dihalogénosulfone(s) aromatique(s) non sulfonée(s) choisie(s) dans le groupe constitué par la 4,4'-dichlorodiphénylsulfone et la 4,4'-difluorodiphénylsulfone par rapport au poids total du composant (IA1) contenu dans le mélange réactionnel (R_{GI}).

5. Composition de moulage thermoplastique selon l'une quelconque des revendications 2 à 4, dans laquelle le composant (IIA1) contient au moins 50 % en poids d'une ou plusieurs dihalogénosulfone(s) aromatique(s) non sulfonée(s) choisie(s) dans le groupe constitué par la 4,4'-dichlorodiphénylsulfone et la 4,4'-difluorodiphénylsulfone par rapport au poids total du composant (IIA1) contenu dans le mélange réactionnel (R_{GII}).

6. Composition de moulage thermoplastique selon l'une quelconque des revendications 3 à 5, dans laquelle le composant (IIA2) contient au moins 50 % en poids d'une ou plusieurs dihalogénosulfone(s) aromatique(s) non sulfonée(s) choisie(s) dans le groupe constitué par la 4,4'-dichlorodiphénylsulfone disulfonée et la 4,4'-difluorodiphénylsulfone disulfonée par rapport au poids total du composant (IIA2) contenu dans le mélange réactionnel (R_{GII}).

7. Composition de moulage thermoplastique selon l'une quelconque des revendications 2 à 6, dans laquelle le composant (IB1) contient au moins 50 % en poids d'un ou plusieurs composés dihydroxy aromatiques choisis dans le groupe constitué par la 4,4'-dihydroxydiphénylsulfone, le 4,4'-dihydroxybiphényle et le bisphénol-A, par rapport au poids total du composant (IB1) contenu dans le mélange réactionnel (R_{GI}).

8. Composition de moulage thermoplastique selon l'une quelconque des revendications 3 à 7, dans laquelle le composant (IIB1) contient au moins 50 % en poids d'un ou plusieurs composés dihydroxy aromatiques choisis dans le groupe constitué par la 4,4'-dihydroxydiphénylsulfone, le 4,4'-dihydroxybiphényle et le bisphénol-A, par rapport au poids total du composant (IIB1) contenu dans le mélange réactionnel (R_{GII}).

9. Composition de moulage thermoplastique selon l'une quelconque des revendications 1 à 8, dans laquelle l'au moins un polymère de polyaryléthersulfone non sulfonée (P) présente moins de 0,05 % en poids de groupes terminaux OH, par rapport au poids moyen en nombre (Mₙ) du polymère de polyaryléthersulfone non sulfonée (P).

10. Composition de moulage thermoplastique selon l'une quelconque des revendications 2 à 9, dans laquelle le composant (IC) et/ou le composant (IIC) comprend au moins 50 % en poids de carbonate de potassium, par rapport au poids total du composant (IC) contenu dans le mélange réactionnel (R_{GI}) et/ou respectivement par rapport au poids total du composant (IIC) contenu dans le mélange réactionnel (R_{GII}).

11. Composition de moulage thermoplastique selon l'une quelconque des revendications 2 à 10, dans laquelle le composant (ID) et/ou le composant (IID) est au moins un solvant polaire aprotique choisi dans le groupe constitué par l'anisole, le diméthylformamide, le diméthylsulfoxyde, le sulfolane, le N,N-diméthylacétamide, la N-méthyl-2-pyrrolidone et la N-éthyl-2-pyrrolidone.

12. Composition de moulage thermoplastique selon l'une quelconque des revendications 1 à 11, dans laquelle le composant (III) est au moins une charge fibreuse choisie dans le groupe constitué par les fibres de carbone, les trichites de titanate de potassium, les fibres d'aramide et les fibres de verre et/ou au moins une charge particulaire choisie dans le groupe constitué par la silice amorphe, le carbonate de magnésium, la craie, le quartz en poudre, le mica, l'argile, la muscovite, la biotite, la suzoite, la malétite d'étain, le talc, la chlorite, la phlogopite, le feldspath, la wollastonite et le kaolin.

13. Composition de moulage thermoplastique selon l'une quelconque des revendications 1 à 12, dans laquelle le composant (II) Y est un équivalent cation.

14. Procédé de fabrication d'un article moulé utilisant la composition de moulage thermoplastique selon l'une quelconque des revendications 1 à 13.

15. Article moulé obtenu par le procédé selon la revendication 14.
